# EUROPEAN PATENT APPLICATION

(11) **EP 1 246 468 A2**
(43) Date of publication of application: **02.10.2002**
(21) Application number: 02004376.6
(22) Date of filing: 05.03.2002
(51) Int. Cl.: H04N 7/173, H04N 17/00

(54) **Cable modem, and channel change method for bi-directional communication system**

(30) Priority: 30.03.2001 JP 2001100136
(71) Applicant: Kabushiki Kaisha Toshiba, Tokyo (JP)
(72) Inventor: Wada, Naoyuki, Intell. Prop. Div., K.K. Toshiba, Tokyo 105-8001 (JP)
(74) Representative: HOFFMANN - EITLE

(57) **Abstract**

A cable modem (9) which performs an upstream communication and downstream communication with a head end system (1) detects a time-out in the downstream communication using a channel designated by the head end system (1). If the time-out is detected in the downstream communication, the cable modem (9) sends by the upstream communication a notification that the time-out has been detected, and restores the downstream communication. The bi-directional communication system can set a suitable channel used in the upstream or downstream communication.

## Description

The present invention relates to a cable modem for a bi-directional communication system such as a cable television system (CATV system), a head end system, and a channel change method.

The CATV system is a bi-directional data communication system. The head end system of the CATV system comprises a CMTS (Cable Modem Termination System).

The CMTS is connected via a coaxial cable to a cable modem installed in a subscriber house.

The cable modem is connected to a personal computer. The personal computer performs bi-directional communication of various data such as audio data and video data between the CMTS via the cable modem and coaxial cable.

In the CATV system, a communication from the CMTS to the personal computer in the subscriber house is called a downstream communication, and a communication from the personal computer to the CMTS is called an upstream communication.

Generally in the downstream communication, a channel for transmitting a TV program is assigned to a given frequency. A channel for transmitting data other than a TV program is assigned to a frequency in a band which does not include the given channel for transmitting the TV program. The downstream communication is performed using the assigned channel.

An upstream communication uses a channel assigned to a frequency lower than the given frequency used to transmit the TV program.

The channel used in the upstream communication does not transmit any TV program. However, radio broadcasting or external noise is transmitted by the upstream communication. Hence, a channel actually used in the upstream communication is assigned to a frequency band which is almost free from such influence.

In the CATV system, the head end system and the subscriber house are usually located apart from each other, and are connected via a coaxial cable.

The coaxial cable itself functions as an antenna and thus picks up noise, for example a frequency used for radio broadcasting.

The channels used in the upstream communication and the downstream communication are designated by the head end system. Each subscriber house is informed of the designated channels.

However, the channels designated by the head end system may not always be optimal for communication for some subscribers house because the some subscriber houses are located very apart from the head end system.

The CATV system may designate a channel which is too low in quality to communicate due to the influence of noise.

As a measure against this problem, a technique of changing a channel used for communication is proposed. However, changing the channel during communication may completely break off the communication. In this case, a long time is necessary to reset a channel to be used and resume the communication.

It is an object of the present invention to provide a cable modem, head end system, and channel change method for suitable setting a communication channel in a bi-directional communication system.

According to an embodiment of the present invention, there is provided a cable modem which can be connected to a head end system and perform a downstream communication for receiving data from the head end system and an upstream communication for transmitting data to the head end system, the cable modem comprising
a communication unit configured to perform a downstream communication for receiving downstream data from the head end system via a first channel designated by the head end system and an upstream communication for transmitting upstream data to the head end system via a second channel designated by the head end system,
a time-out detection unit configured to determine whether or not the downstream data is received from the head end system via the first channel within a predetermined period of time, and
a time-out notification unit configured to notify the head end system of a detection of time-out when the time-out detection unit does not determine that the downstream data is received from the head end system within the predetermined period of time.

According to another embodiment of the present invention, there is provided a cable modem termination system which can be connected to a cable modem and perform a data communication between the cable modem, the cable modem termination system comprising
a communication unit configured to perform a downstream data communication via a first channel and an upstream data communication via a second channel between the cable modem, and
a time-out detection unit configured to determine whether or not the upstream data communication from the cable modem is performed within a predetermined period of time.

According to a still another embodiment of the present invention, there is provided a channel change method in a bi-directional communication system which comprises a head end system and a cable modem connected to the head end system and performs a bi-directional data communication between the head end system and the cable modem, the head end system comprising a first cable modem termination system and a second cable modem termination system, the method comprising
performing, between the cable modem and the first cable modem termination system, a downstream communication from the first cable modem termination system to the cable modem via a first channel and an upstream communication from the cable modem to the first cable modem termination system via a second channel,
performing downstream communications from the second cable modem termination system to the cable modem via predetermined candidate channels,
determining whether or not each of the downstream communications via the predetermined candidate channels is successful,
measuring a noise in success candidate channels via which the downstream communications are successful, and
performing a downstream communication between the head end system and the cable modem via one of the success candidate channels in which the noise is smaller than a threshold value.

According to a still another embodiment of the present invention, there is provided a channel change method in a bi-directional communication system which comprises a head end system and a cable modem connected to the head end system and performs a bi-directional data communication between the head end system and the cable modem, the head end system comprising a first cable modem termination system and a second cable modem termination system, the method comprising
performing, between the cable modem and the first cable modem termination system, a downstream communication from the first cable modem termination system to the cable modem via a first channel and an upstream communication from the cable modem to the first cable modem termination system via a second channel,
performing upstream communications from the cable modem to the second cable modem termination system via predetermined candidate channels,
determining whether or not each of the upstream communications via the predetermined candidate channels is successful,
measuring a noise in success candidate channels via which the upstream communications are successful, and
performing an upstream communication between the head end system and the cable modem via one of the success candidate channels in which the noise is smaller than a threshold value.

According to a still another embodiment of the present invention, there is provided a channel change method in a bi-directional communication system which comprises a head end system and a cable modem connected to the head end system and performs a bi-directional data communication between the head end system and the cable modem, the head end system comprising a first cable modem termination system and a second cable modem termination system, the method comprising
performing, between the cable modem and the first cable modem termination system, a downstream communication from the first cable modem termination system to the cable modem via a first channel and an upstream communication from the cable modem to the first cable modem termination system via a second channel,
performing a downstream communication from the second cable modem termination system to the cable modem via a third channel,
determining whether or not the downstream communications via the third channels is successful, and
performing a downstream communication between the head end system and the cable modem via the third channel when it is determined that the downstream communications via the third channels is successful.

According to a still further embodiment of the present invention, there is provided a channel change method in a bi-directional communication system which comprises a head end system and a cable modem connected to the head end system and performs a bi-directional data communication between the head end system and the cable modem, the head end system comprising a first cable modem termination system and a second cable modem termination system, the method comprising
performing, between the cable modem and the first cable modem termination system, a downstream communication from the first cable modem termination system to the cable modem via a first channel and an upstream communication from the cable modem to the first cable modem termination system via a second channel,
performing an upstream communication from the cable modem to the second cable modem termination system via a third channel,
determining whether or not the upstream communications via the third channels is successful, and
performing an upstream communication between the head end system and the cable modem via the third channel when it is determined that the upstream communications via the third channels is successful.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an arrangement of a CATV system according to the first embodiment of the present invention;
FIG. 2 is a flow chart showing an example of the channel change method of the CATV system in the first embodiment;
FIG. 3 is a flow chart of the first embodiment showing the operation of a head end system which determines whether the downstream communication via a candidate channel is possible;
FIG. 4 is a flow chart of the first embodiment showing the operation of a cable modem which determines whether the downstream via a candidate channel is possible;
FIG. 5 is a flow chart of the first embodiment showing the operation of the head end system which determines whether the upstream communication via a candidate channel is possible;
FIG. 6 is a flow chart of the first embodiment showing the operation of the cable modem which determines whether the upstream communication via a candidate channel is possible;
FIG. 7 is a block diagram showing an arrangement of a head end system according to the second embodiment of the present invention; and
FIG. 8 is a block diagram showing an arrangement of a head end system according to the third embodiment of the present invention.

Preferred embodiments of the present invention will be described in detail below with reference to the several views of the accompanying drawing. All the following embodiments will exemplify a CATV system, but the present invention can be similarly applied to any bi-directional communication system. The same reference numerals in the respective views denote the same parts.

### (First Embodiment)

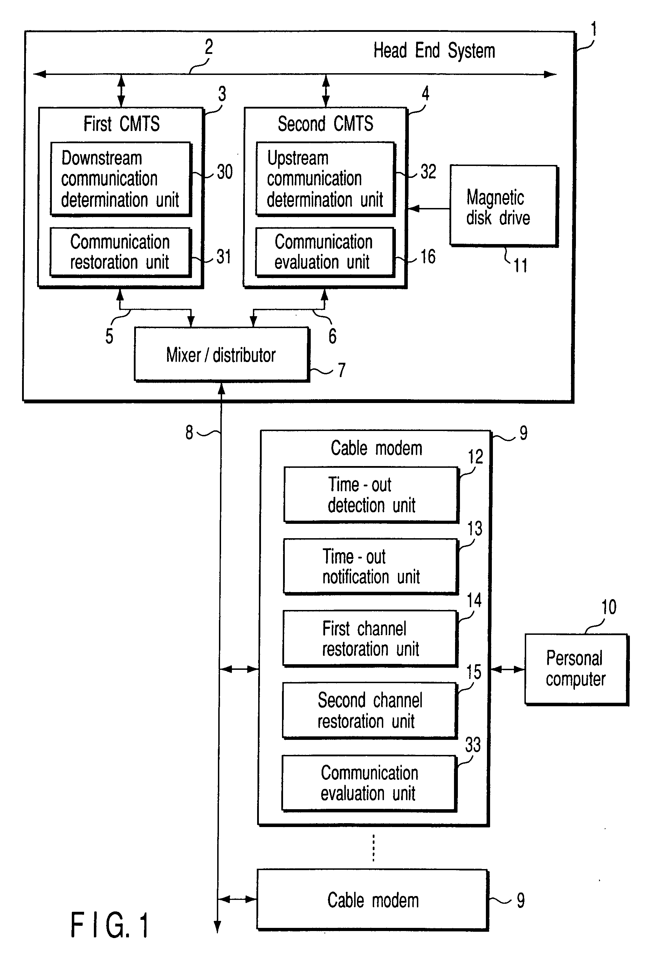

FIG. 1 is a block diagram showing an arrangement of a CATV system according to the first embodiment of the present invention.

The center side of the CATV system comprises a head end system 1. The head end system 1 comprises a LAN (local area network) 2.

The LAN 2 is connected to first and second CMTSs 3 and 4. The first and second CMTSs 3 and 4 can communicate with each other via the LAN 2.

The first and second CMTSs 3 and 4 are connected to a mixer/distributor 7 via coaxial cables 5 and 6, respectively.

The mixer/distributor 7 and each subscriber house are wired by a coaxial cable 8. The coaxial cable 8 is connected to a cable modem 9 installed in the subscriber house. The cable modem 9 is connected to a personal computer 10.

The mixer/distributor 7 mixes downstream communication data from the first CMTS 3 and downstream communication data from the second CMTS 4, and outputs the mixed data to the coaxial cable 8. The mixer/distributor 7 distributes upstream communication data received from a plurality of cable modems 9 via the coaxial cable 8 to the first and second CMTSs 3 and 4.

The second CMTS 4 is connected to a magnetic disk drive 11 serving as an external storage drive. A list of candidate channels usable for an upstream communication and a downstream communication is registered in the magnetic disk drive 11.

The first CMTS 3 communicates with the cable modem 9 by using a predetermined channel selected among the candidate channels, and transmits a channel change instruction to the second CMTS 4 when it is seems that the quality of the downstream channel via the one of the candidate channels.

In the first embodiment, the first CMTS 3 comprises a downstream communication determination unit 30 which qualifies the downstream communication by a candidate channel and communication restoration unit 31 which restore the channel used for the downstream communication from the candidate channel to the predetermined channel.

The downstream communication determination unit 30 determines whether the downstream communication using the candidate channel selected from the list stored in the magnetic disk drive 11 by the second CMTS 4 fails based on the time-out time.

If the upstream or downstream communications using the candidate channel selected by the second CMTS 4 fails, the communication restoration unit 31 resumes upstream or downstream communication using the predetermined channel, and restores the communication.

When the second CMTS 4 receives a channel change instruction from the first CMTS 3, the CMTS 4 selects another candidate channel from the list registered in the magnetic disk drive 11.

The second CMTS 4 tries to communicate with the cable modem 9 by using the new candidate channel.

In the first embodiment, the second CMTS 4 comprises an upstream communication determination unit 32 and communication evaluation unit 16.

The upstream communication determination unit 32 determines whether the upstream communication using a candidate channel selected by the second CMTS 4 fails. If upstream communication using the candidate channel fails, the upstream communication determination unit 32 requests the upstream communication using the predetermined channel of the first CMTS 3.

The communication evaluation unit 16 measures noise for each channel used in the upstream communication. For a channel with little noise, the communication evaluation unit 16 evaluates a higher communication quality.

The cable modem 9 comprises a time-out detection unit 12, time-out notification unit 13, first channel restoration unit 14, second channel restoration unit 15, and communication evaluation unit 33.

The time-out detection unit 12 detects a time-out in the downstream communication using a channel designated by the head end system 1.

If the time-out detection unit 12 detects a time-out in the downstream communication, the time-out notification unit 13 notifies the upstream communication determination unit 32 of the head end system 1 by upstream communication that the time-out has been detected.

If the time-out detection unit 12 detects a time-out in the downstream communication, the first channel restoration unit 14 changes the channel currently used in the downstream communication to a predetermined downstream communication channel which was used by the first CMTS 3.

The second channel restoration unit 15 receives an upstream communication channel restoration instruction from the communication restoration unit 31 of the head end system 1 by the downstream communication. Then, the second channel restoration unit 15 changes the channel currently used in the upstream communication to the head end system 1 into a predetermined upstream communication channel which was used by the first CMTS 3.

The communication evaluation unit 33 measures noise for each channel used in the downstream communication. For a channel with little noise, the communication evaluation unit 33 evaluates a high communication quality.

In the CATV system, noise is superposed to a channel used in the upstream or downstream communication during execution of communication between the first CMTS 3 and the personal computer 10. If the noise degrades the communication quality, the channel in use is changed to an optimum one.

A channel change method of changing the channel to an optimal one will be explained.

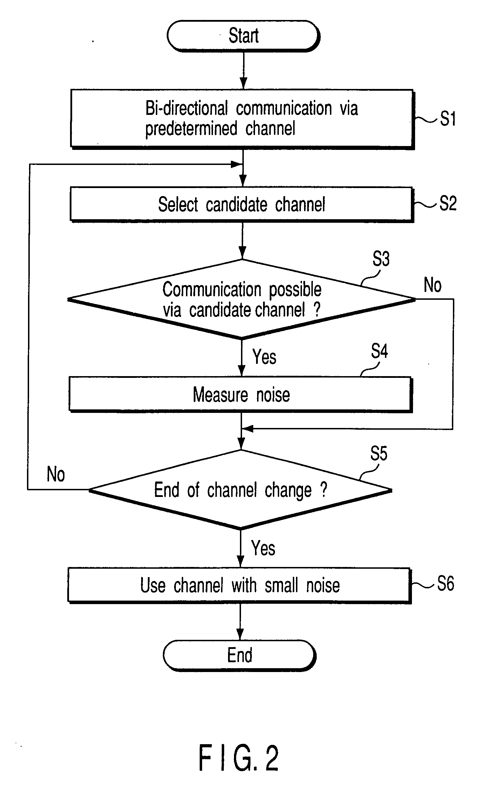

FIG. 2 is a flow chart showing an example of the channel change method of the CATV system.

In step S1, the first CMTS 3 bi-directionally communicates with the cable modem 9 via a first predetermined channel used in the upstream communication and a second predetermined channel used in the downstream communication.

If it is desired to change the channel due to noise or the like, in step S2, the second CMTS 4 selects one of candidate channels to be used for the upstream or downstream communication.

In step S3, the downstream communication determination unit 30 of the first CMTS 3 or the upstream communication determination unit 32 of the second CMTS 4 determines whether or not the communication via the candidate channel is successful, i.e., no time-out occurs.

If it determined that the communication via the candidate channel is successful, noise in the communication using the candidate channel is measured and recorded in step S4.

In step S5, it is determined whether all the candidate channels have been checked. If a candidate channel which has not been determined exists, the flow returns to step S2. If YES in step S5, the flow advances to step S6.

In step S6, it is determined that a candidate channel which exhibits the smallest noise is an optimum channel for communication. Using the selected optimum channel, the head end system 1 and cable modem 9 communicate with each other.

An operation of determining whether the communication via the candidate channel is possible in steps S2 to S6 will be described in detail.

An operation up to determination of whether the downstream communication via a candidate channel is possible will be explained.

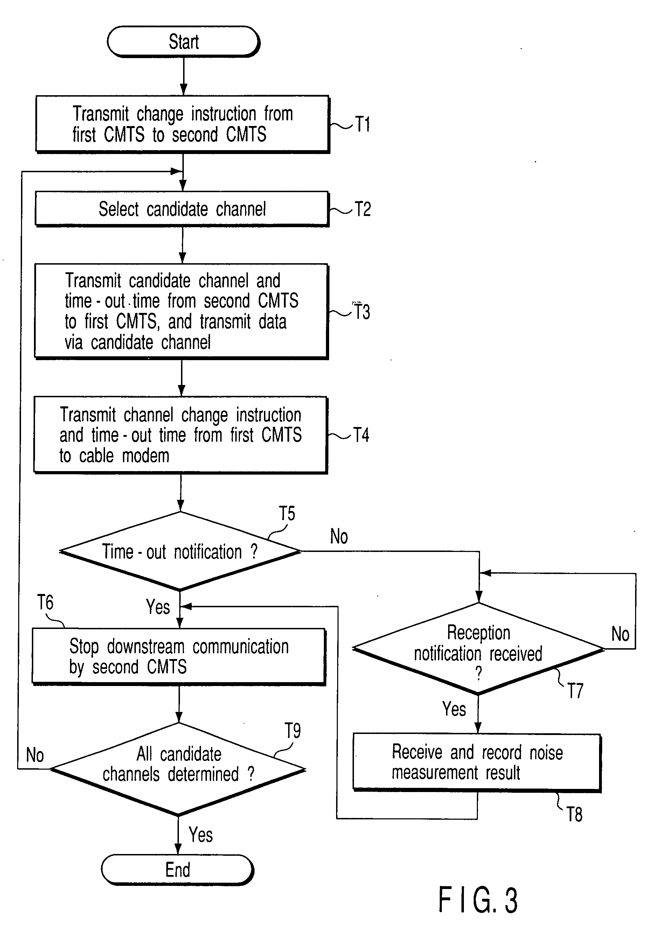

FIG. 3 is a flow chart showing the operation of the head end system 1 which determines whether the downstream communication via a candidate channel is possible.

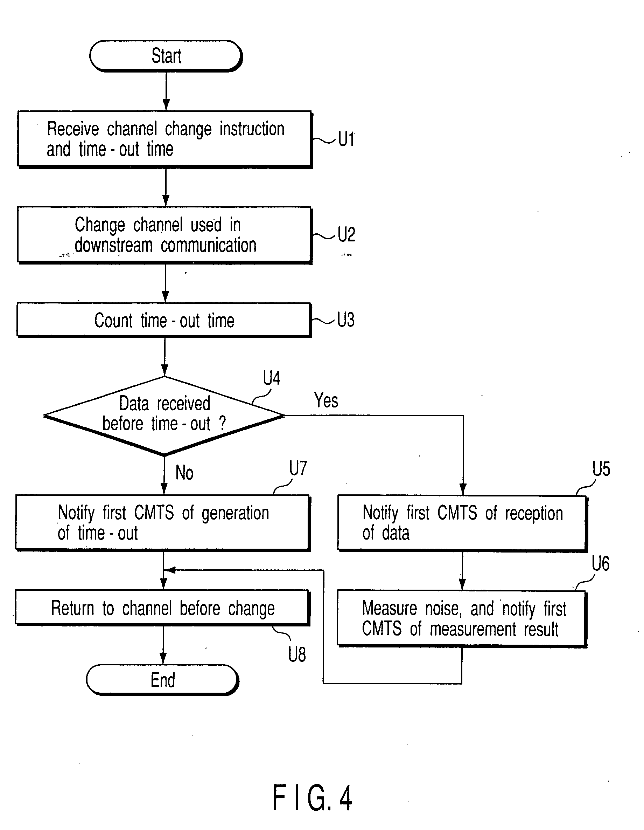

FIG. 4 is a flow chart showing the operation of the cable modem 9 which determines whether the downstream communication via a candidate channel is possible.

In step T1, the first CMTS 3 instructs the second CMTS 4 to perform processing for changing a channel used in downstream communication.

In step T2, the second CMTS 4 selects one of the candidate channels from the list of channels usable in the downstream communication that is registered in the magnetic disk drive 11 on the basis of the channel change instruction from the first CMTS 3.

In step T3, the second CMTS 4 notifies the first CMTS 3 of the selected candidate channel and a time-out time. The second CMTS 4 outputs the downstream communication data to the cable modem 9 by using the selected candidate channel.

In step T4, the first CMTS 3 notifies the cable modem 9 via a channel currently used in the downstream communication of an instruction for changing the downstream communication channel to the candidate channel selected by the second CMTS 4 and the time-out time set by the second CMTS 4. At this time, the first CMTS 3 does not change a channel currently used in the upstream communication and keeps using it.

In step U1 of FIG. 4, the cable modem 9 receives the instruction for changing the channel used in the downstream communication and the time-out time from the first CMTS 3.

In step U2, the cable modem 9 changes the channel used in the downstream communication on the basis of the received channel change instruction. The cable modem 9 waits for downstream data transmitted from the second CMTS 4 via the candidate channel.

In step U3, the cable modem 9 sets the received time-out time in a counter (not shown), and starts counting the time-out time.

In step U4, the cable modem 9 uses the time-out detection unit 12 to check whether the downstream communication data transmitted from the second CMTS 4 has been received via the candidate channel before the lapse of the time-out time.

If the downstream communication data has been received before the lapse of the time-out time, the cable modem 9 notifies in step U5 the first CMTS 3 that the downstream communication data has been received within the time-out time. In step U6, the cable modem 9 measures noise in the downstream communication data transmitted from the second CMTS 4, and notifies the first CMTS 3 of the result. In step U8, the cable modem 9 changes the channel used in the downstream communication to the one which is used by the first CMTS 3 before channel change.

If NO in step U4, the cable modem 9 uses the time-out notification unit 13 in step U7 to notify the first CMTS 3 of generation of the time-out. In step U8, the cable modem 9 changes the channel used in the downstream communication to the one which is used by the CMTS 3 before channel change.

In step T5, the first CMTS 3 waits for reception of a time-out notification from the cable modem 9. The first CMTS 3 checks whether it has received the time-out notification from the cable modem 9.

If the first CMTS 3 has received the time-out notification, it instructs in step T6 the second CMTS 4 to stop the downstream communication.

If NO in step T5, the first CMTS 3 waits for a downstream data reception notification from the cable modem 9 in step T7. Upon reception of the downstream data reception notification, the first CMTS 3 receives the noise measurement result from the cable modem 9 and records the result in step T8. If YES in step T5, the first CMTS 3 instructs the second CMTS 4 to stop the downstream communication in step T6.

In step T9, the second CMTS 4 checks whether communication enable determination has been done for all the candidate channels which are registered in the magnetic disk drive 11 and are to be used for the downstream communication. If a candidate channel which has not been determined exists, the flow returns to step T2 to continue the above-described processing. If YES in step T9, the processing ends.

Operation of determining whether communication is possible via a candidate channel used in the upstream communication will be described.

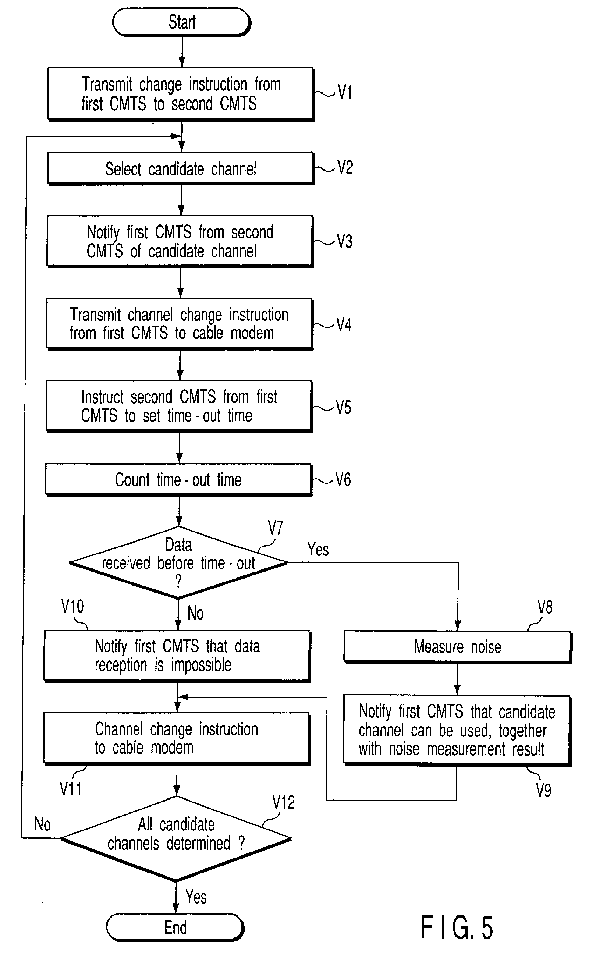

FIG. 5 is a flow chart showing the operation of the head end system 1 which determines whether the upstream communication via a candidate channel is possible.

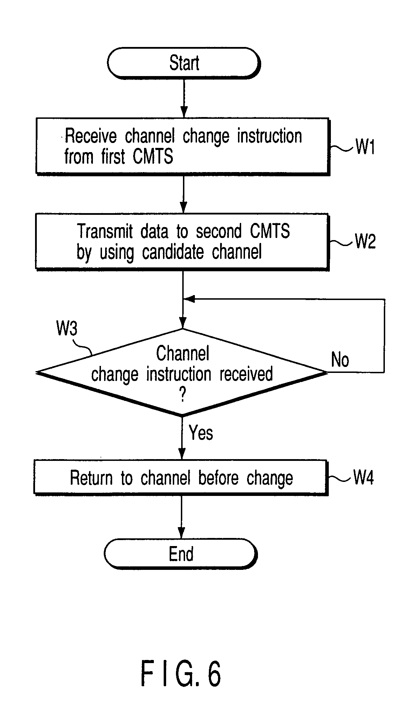

FIG. 6 is a flow chart showing the operation of the cable modem 9 which determines whether the upstream communication via a candidate channel is possible.

In step V1, the first CMTS 3 instructs the second CMTS 4 to select one candidate channel from the list of the candidates channels usable in the upstream communication that is registered in the magnetic disk drive 11.

In step V2, on the basis of this instruction, the second CMTS 4 selects one candidate channel from the list of channels usable in the upstream communication that is registered in the magnetic disk drive 11.

In step V3, the second CMTS 4 notifies the first CMTS 3 of the selected candidate channel.

In step V4, the first CMTS 3 transmits to the cable modem 9 an instruction of changing the upstream communication channel to the candidate channel selected by the second CMTS 4.

In step V5, the first CMTS 3 instructs the second CMTS 4 to set a time-out time.

In step V6, the second CMTS 4 which has received the time-out time setting instruction sets a time-out time in the counter (not shown), and starts counting the time-out time.

In step W1 of FIG. 6, the cable modem 9 receives the instruction for changing the channel used in the upstream communication.

In step W2, the cable modem 9 transmits upstream communication data to the second CMTS 4 by using the candidate channel selected by the channel change instruction. After that, the cable modem 9 executes a processing in step W3.

In step V7, the second CMTS 4 checks whether the upstream communication data from the cable modem 9 via the selected candidate channel used in the upstream communication is received before the lapse of the time-out time.

If the upstream communication data is received before the time-out, the second CMTS 4 measures noise on the received upstream communication data in step V8. In step V9, the second CMTS 4 notifies the first CMTS 3 that the candidate channel can be used for the upstream communication, together with the noise measurement result. Then, the first CMTS 3 executes processing in step V11.

If NO in step V7, the second CMTS 4 notifies in step V10 the first CMTS 3 that the upstream communication data cannot be received before the lapse of the time-out time.

In step V11, the first CMTS 3 instructs the cable modem 9 to change the channel for the upstream communication to the one used before channel change in step V4.

In step W3, the cable modem 9 checks whether it receives the upstream communication channel change instruction from the first CMTS 3.

If the cable modem 9 receives the upstream communication channel change instruction from the first CMTS 3, the cable modem 9 changes in step W4 the channel used in the upstream communication to the one used before channel change in step V4.

In step V12, the second CMTS 4 checks whether communication enable determination has been done for all the candidate channels which are registered in the magnetic disk drive 11 and are to be used for the upstream communication. If a candidate channel which has not been determined exists, the flow returns to step V2 to continue the above-described processing. If YES in step V12, the processing ends.

As described above, according to the first embodiment, it is determined whether communication is possible via a candidate channel for at least one of the upstream and downstream communications during bi-directional communication between the first CMTS 3 and the cable modem 9 in the CATV system. The candidate channel determined to enable communication undergoes noise measurement.

An optimal channel which enables communication can be selected in the upstream or downstream communication in the CATV system.

In the first embodiment, when the channel for the upstream or downstream communication can be changed to an optimal channel during bi-directional communication between the first CMTS 3 and the cable modem 9 in the CATV system. Then, it is determined based on the design policy of the CATV system whether the upstream or downstream communication via the selected channel is performed between the first CMTS 3 and the cable modem 9, or between the second CMTS 4 and the cable modem 9.

In the first embodiment, the communication evaluation unit 16 for evaluating the communication quality of each channel may not be arranged in the second CMTS 4 but may be arranged at another location. For example, the communication evaluation unit 16 may be connected between the coaxial cable 8 and the mixer/distributor 7.

As an example of the communication evaluation method of the communication evaluation unit 16, the communication quality is determined to be higher for, e.g., a larger S/N value representing the ratio of a signal to noise. As another example of the communication evaluation method, the communication quality is determined to be higher for a higher signal level on the data receiving side. As still another example of the communication evaluation method, the communication quality is determined to be higher for, e.g., a smaller shift between original data before A/D conversion and A/D-converted data.

In the head end system 1 of the first embodiment, the first CMTS 3 comprises the downstream communication determination unit 30 determining whether the downstream communication via the candidate channel is normal, and the communication restoration unit 31 for returning the channel to the original one by the first CMTS 3 and restoring the upstream or downstream communication when the upstream or downstream communication via the candidate channel is abnormal. Further, the second CMTS 4 comprises the upstream communication determination unit 32 for determining whether the upstream communication via the candidate channel is normal.

Alternatively, the downstream communication determination unit 30, upstream communication determination unit 32, and communication restoration unit 31 may be arranged at other locations. An apparatus having the downstream communication determination unit 30, upstream communication determination unit 32, and communication restoration unit 31 may be connected to the LAN 2.

### (Second Embodiment)

The second embodiment will exemplify a modification of the head end system 1 described in the first embodiment.

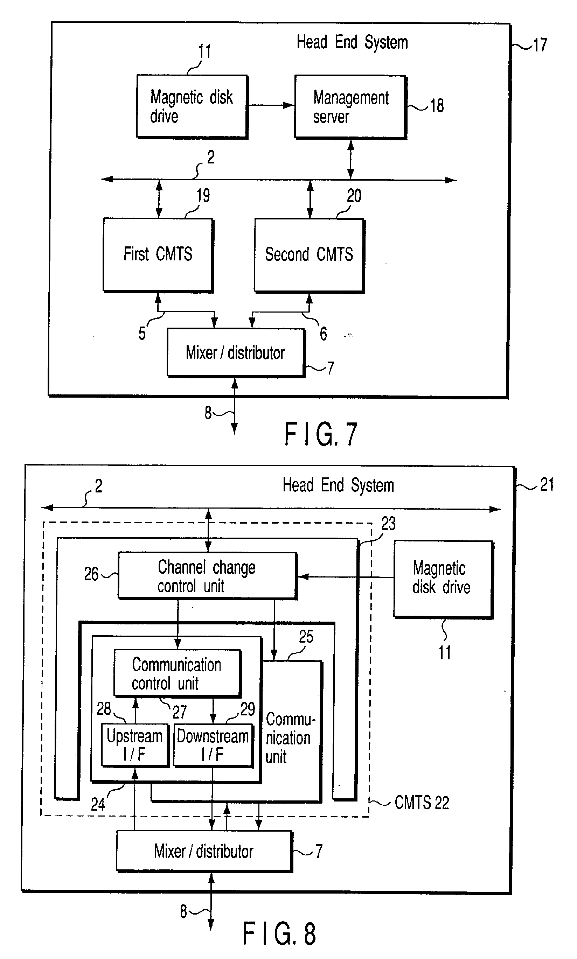

FIG. 7 is a block diagram showing an arrangement of a head end system according to the second embodiment of the present invention.

A management server 18, first CMTS 19, and second CMTS 20 in a head end system 17 are connected to a LAN 2, and exchange data.

The mixer/distributor 7 in the head end system 17 mixes a downstream communication data from the first CMTS 19 and a downstream communication data from the second CMTS 20, and outputs the mixed data to the coaxial cable 8. The mixer/distributor 7 distributes the upstream communication data received from a plurality of cable modems 9 via the coaxial cable 8 to the first and second CMTSs 19 and 20.

The first and second CMTSs 19 and 20 set a channel in accordance with management processing of the management server 18, and perform data communication.

The management server 18 executes the same operations as the communication evaluation unit 16, downstream communication determination unit 30, upstream communication determination unit 32, and communication restoration unit 31 in the first embodiment. To realize channel change operation in the first embodiment, the management server 18 transmits instructions to the first and second CMTSs 19 and 20.

For example, the management server 18 reads out the recording contents of the magnetic disk drive 11 and selects a candidate channel. The management server 18 transmits to the second CMTS 20 a channel change instruction of using the selected candidate channel.

If communication via the candidate channel is abnormal, the management server 18 transmits to the first and second CMTSs 19 and 20 an instruction of restoring communication by a channel which enables normal communication.

Since the head end system 17 comprises the management server 18, the structures of the first and second CMTSs 19 and 20 can be simplified in addition to the effects of the first embodiment.

### (Third Embodiment)

The third embodiment will exemplify another modification of the head end system 1 described in the first embodiment.

FIG. 8 is a block diagram showing an arrangement of a head end system according to the third embodiment of the present invention.

A CMTS 22 of a head end system 21 comprises a plurality of communication units 24 and 25 detachable from a main body 23.

The main body 23 has a channel change control unit 26 which executes the same operations as the communication evaluation unit 16, downstream communication determination unit 30, upstream communication determination unit 32, and communication restoration unit 31 in the first embodiment. To realize channel change operation, the channel change control unit 26 transmits instructions to the communication units 24 and 25, similar to the management server 18 in the second embodiment. Channel change operation realized by the channel change control unit 26 is the same as that of the first embodiment except that the communication units 24 and 25 are adopted instead of the first and second CMTSs 3 and 4.

In the third embodiment, the communication units 24 and 25 are expansion boards and are mounted on the main body 23.

A communication control unit 27 of the communication unit 24 performs the upstream communication by using an upstream communication interface 28 and downstream communication by using a downstream communication interface 29.

The communication unit 25 performs communication similarly to the communication unit 24.

Accordingly, one CMTS 22 can achieve the same effects as those of the first or second embodiment.

### (Fourth Embodiment)

In the first to third embodiments, when the upstream or downstream communication channel is to be changed, whether communication is possible is determined for all the candidate channels, as shown in the flow chart of Fig. 2. Then, noise is measured on candidate channels which enable communication, and a candidate channel which exhibits the smallest noise is selected and used.

However, the present invention is not limited to this. For example, when a candidate channel is determined to enable communication, the candidate channel may be selected and used without measuring noise in the communication using the candidate channel. In this case, the channel can be changed at a higher speed in comparison with the first to third embodiments.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein. For example, the present invention can be practiced as a computer readable recording medium in which a program for allowing the computer to function as predetermined means, allowing the computer to realize a predetermined function, or allowing the computer to conduct predetermined means.

The method described in each embodiment can be realized by a program executable by a computer. The program can be provided to various apparatuses by writing it on a recording medium such as a flexible disk, a magnetic disk such as a hard disk, an optical disk (CD-ROM, DVD, or the like), or a semiconductor memory. The program can also be provided to various apparatuses by transmitting it via a communication medium. In this case, a computer loads the program recorded on the recording medium, or receives the program via the communication medium. The program controls the computer operation to execute the above-described processing.

## Claims

1. A cable modem which can be connected to a head end system and perform a downstream communication for receiving data from the head end system and an upstream communication for transmitting data to the head end system, the cable modem **characterized by** comprising:
means for performing a downstream communication for receiving downstream data from the head end system via a first channel designated by the head end system and an upstream communication for transmitting upstream data to the head end system via a second channel designated by the head end system;
time-out detecting means (12) for determining whether or not the downstream data is received from the head end system via the first channel within a predetermined period of time; and
time-out notifying means (13) for notifying the head end system of a detection of time-out when the time-out detecting means does not determine that the downstream data is received from the head end system within the predetermined period of time.

2. The cable modem according to claim 1, **characterized by** further comprising:
noise measuring means (33) for measuring a noise in the first channel when the time-out detecting means determines that the downstream data is received from the head end system within the predetermined period of time.

3. A cable modem termination system which can be connected to a cable modem and perform a data communication between the cable modem, the cable modem termination system **characterized by** comprising:
means for performing a downstream data communication via a first channel and an upstream data communication via a second channel between the cable modem; and
time-out detecting means (32) for determining whether or not the upstream data communication from the cable modem is performed within a predetermined period of time.

4. The cable modem termination system according to claim 3, **characterized by** further comprising:
noise measuring means (16) for measuring a noise in the second channel when the time-out detecting means determines that the upstream data communication is performed within the predetermined period of time.

5. A channel change method in a bi-directional communication system which comprises a head end system (1) and a cable modem (9) connected to the head end system (1) and performs a bi-directional data communication between the head end system (1) and the cable modem (9), the head end system (1) comprising a first cable modem termination system (3) and a second cable modem termination system (4), the method **characterized by** comprising:
performing, between the cable modem (9) and the first cable modem termination system (3), a downstream communication from the first cable modem termination system (3) to the cable modem (9) via a first channel and an upstream communication from the cable modem (9) to the first cable modem termination system (3) via a second channel;
performing downstream communications from the second cable modem termination system (4) to the cable modem (9) via predetermined candidate channels;
determining whether or not each of the downstream communications via the predetermined candidate channels is successful;
measuring a noise in success candidate channels via which the downstream communications are successful; and
performing a downstream communication between the head end system (1) and the cable modem (9) via one of the success candidate channels in which the noise is smaller than a threshold value.

6. A channel change method in a bi-directional communication system which comprises a head end system (1) and a cable modem (9) connected to the head end system (1) and performs a bi-directional data communication between the head end system (1) and the cable modem (9), the head end system (1) comprising a first cable modem termination system (3) and a second cable modem termination system (4), the method **characterized by** comprising:
performing, between the cable modem (9) and the first cable modem termination system (3), a downstream communication from the first cable modem termination system (3) to the cable modem (9) via a first channel and an upstream communication from the cable modem (9) to the first cable modem termination system (3) via a second channel;
performing upstream communications from the cable modem (9) to the second cable modem termination system (4) via predetermined candidate channels;
determining whether or not each of the upstream communications via the predetermined candidate channels is successful;
measuring a noise in success candidate channels via which the upstream communications are successful; and
performing an upstream communication between the head end system (1) and the cable modem (9) via one of the success candidate channels in which the noise is smaller than a threshold value.

7. A channel change method in a bi-directional communication system which comprises a head end system (1) and a cable modem (9) connected to the head end system (1) and performs a bi-directional data communication between the head end system (1) and the cable modem (9), the head end system (1) comprising a first cable modem termination system (3) and a second cable modem termination system (4), the method **characterized by** comprising:
performing, between the cable modem (9) and the first cable modem termination system (3), a downstream communication from the first cable modem termination system (3) to the cable modem (9) via a first channel and an upstream communication from the cable modem (9) to the first cable modem termination system (3) via a second channel;
performing a downstream communication from the second cable modem termination system (4) to the cable modem (9) via a third channel;
determining whether or not the downstream communications via the third channels is successful; and
performing a downstream communication between the head end system (1) and the cable modem (9) via the third channel when it is determined that the downstream communications via the third channels is successful.

8. A channel change method in a bi-directional communication system which comprises a head end system (1) and a cable modem (9) connected to the head end system (1) and performs a bi-directional data communication between the head end system (1) and the cable modem (9), the head end system (1) comprising a first cable modem termination system (3) and a second cable modem termination system (4), the method **characterized by** comprising:
performing, between the cable modem (9) and the first cable modem termination system (3), a downstream communication from the first cable modem termination system (3) to the cable modem (9) via a first channel and an upstream communication from the cable modem (9) to the first cable modem termination system (3) via a second channel;
performing an upstream communication from the cable modem (9) to the second cable modem termination system (4) via a third channel;
determining whether or not the upstream communications via the third channels is successful; and
performing an upstream communication between the head end system (1) and the cable modem (9) via the third channel when it is determined that the upstream communications via the third channels is successful.
